Europäisches Patentamt

European Patent Office

Office européen des brevets

⑱

(11) Publication number: **0 018 110**
**B1**

(12) **EUROPEAN PATENT SPECIFICATION**

(45) Date of publication of patent specification: **09.10.85**

(21) Application number: **80300953.9**

(22) Date of filing: **27.03.80**

(51) Int. Cl.⁴: **C 03 C 13/00,** G 02 B 6/00,
C 03 C 3/064, C 03 C 3/089

(54) **Optical fibre core glass, optical fibres containing such glass and process for the manufacture of such glass.**

(30) Priority: **04.04.79 GB 7911765**

(43) Date of publication of application:
**29.10.80 Bulletin 80/22**

(45) Publication of the grant of the patent:
**09.10.85 Bulletin 85/41**

(84) Designated Contracting States:
**AT BE CH DE FR GB IT NL SE**

(56) References cited:
**FR-A-2 368 444**
**GB-A-2 002 341**
**US-A-4 023 952**
**US-A-4 094 689**
**US-A-4 097 258**

**PHYSICS & CHEMISTRY OF GLASSES, vol. 21,
no. 1, February 1980, pages 39, 40, Sheffield,
G.B., K.J. BEALES et al.: "Optical fibres of low
loss and high numerical aperture"**

(73) Proprietor: **THE POST OFFICE**
**23 Howland Street**
**London W1P 6HQ (GB)**

(72) Inventor: **Beales, Keith John**
**40 Church Lane**
**Henley Ipswich, Suffolk (GB)**
Inventor: **Partington, Sally**
**6 Rose Acre**
**Holton St. Mary Colchester, Essex (GB)**
Inventor: **Dunn, Anthony Gladwyn**
**39 Clemsford Close**
**Felixstowe Suffolk (GB)**

(74) Representative: **Jewess, Michael et al**
**British Telecom Intellectual Property Unit Room**
**1304 151 Gower Street**
**London WC1E 6BA (GB)**

Courier Press, Leamington Spa, England.

# 0 018 110

## Description

The present invention relates to a high numerical aperture optical fibre core glass having a composition chosen so that it is not subject to devitrification or phase separation, said glass comprising soda, boric oxide and silica together with 0.01 to 1% by weight of a redox buffering agent to maintain a fictive partial oxygen pressure in the glass.

The invention further relates to a process for the manufacture of such glass and to high numerical aperture optical fibres.

The amount of light coupled into an optical fibre is proportional to its (numerical aperture)[2] and to the cross sectional area of the fibre core. For short distance optical fibre systems (less than one kilometre in length) efficient power launching into the fibre is of considerable importance. There is thus a need for high numerical aperture, large core fibre for use in short distance systems such as data links etc.

Three types of high numerical aperture fibre are known in the art. All these suffer from certain disadvantages. Plastics-clad silica fibre with numerical apertures up to 0.35 can be prepared but there is some doubt as to the integrity of the core/cladding interface (and coupling is difficult). The modified chemical vapour deposition technique has been used to produce highly doped germania-borosilicate fibre with a numerical aperture of 0.38. However large expansivity mismatch is generated in the pre-forms, which are thus susceptible to shattering on cooling. Fibre with a numerical aperture of 0.53 has been prepared using the double crucible technique with germania-baria-doped core glasses, however, the loss of this fibre has been in excess of 20 dB/km. This work was reported in a paper entitled Multi Component Glass Fibres with high Numerical Aperture—Electronics Letters Volume 14 No. 9 page 280. It is believed that the base glass used for these fibres, was a sodium calcium silicate glass. It should be noted that it is well known to use barium oxide and germania to raise the refractive index of a glass.

US Patent Specification No. 4023952 (corresponding to UK Patent Specification No. 1507711) describes a process for manufacturing a soda-boro-silicate glass for use in optical fibres. This specification discusses the importance of selecting an appropriate redox state for the glass in order to minimise absorption losses in soda-boro-silicate glasses due to iron and copper impurities.

The above mentioned specification is concerned with optical fibre glasses containing no extra dopants to vary the refractive index and in consequence recommends a characteristic redox state typified by subjecting the melt to a partial oxygen pressure of $10^{-13}$ atmospheres ($10^{-8}$ Pascal) i.e. a reducing atmosphere, although some of the glasses exemplified in that specification are said to have $CO_2$ alone bubbled through them instead of the preferred $CO/CO_2$ mixture. The use of $CO_2$ alone will of necessity establish a different less reducing characteristic redox state.

Also mentioned in the cited specification is the use of a redox buffering agent such as arsenic trioxide or antimony trioxide which if present in small quantities will maintain the glass in the established characteristic redox state after preparation and during re-melting for fibre production.

If the technique as described in the above mentioned specification, for the preparation of soda-boro-silicate glasses, is used for the preparation of soda-boro-silicate glasses to which germania and/or baria have been added, glass is obtained which has an extremely high scatter loss when a $CO/CO_2$ mixture and not $CO_2$ alone is used. The reason for this high scatter loss is uncertain.

We have discovered however that by making the glass under oxidising conditions, the scatter loss is reduced. On the other hand the use of highly oxidising conditions results in an unacceptably high absorption loss. If an intermediate redox state is used a glass is obtained in which there is a satisfactory balance between absorption loss and scatter loss. An aspect of the present invention accordingly resides in the selection of the characteristic intermediate redox state.

Accordingly the glass of the present invention is characterised in that the glass contains:

(i) 15—25 mole % of soda
(ii) 0—20 mole % of boric oxide or a mixture of boric oxide and barium oxide such that up to 12 mole % of the glass is barium oxide, and
(iii) 25—65 mole % of silica or a mixture of germania and silica such that up to 42 mole % of the glass is germania,

the glass including at least either germania or barium oxide, in that the glass is in the same redox state as is obtained when the glass is melted and frozen in equilibrium with a partial oxygen pressure of substantially 1 Pascal, and in that the refractive index is greater than 1.54.

The present invention further provides a high numerical aperture optical fibre characterised in that it has a core of glass as defined above, and a cladding of soda-boro-silicate glass having a composition chosen so that it is not subject to devitrification or phase separation.

The invention also includes a process for the manufacture of a high numerical aperture optical fibre core glass having a composition chosen so that it is not subject to devitrification or phase separation, said process comprising the steps of producing a melt comprising soda, boric oxide and silica, establishing a characteristic redox state in the glass melt, and maintaining said state by the addition of 0.01 to 1% by weight of a redox buffering agent to the melt, characterised in that the melt contains:

2

(i) 15—25 mole % of soda,

(ii) 0—20 mole % of boric oxide or a mixture of boric oxide and barium oxide such that up to 12 mole % of the melt is barium oxide and

(iii) 25—65 mole % of silica or a mixture of germania and silica such that up to 42 mole % of the melt is germania,

the melt including at least either germania or barium oxide, in that the establishing step comprises subjecting the melt to a partial oxygen pressure of substantially 1 Pascal, and in that the melt composition results in a glass having a refractive index greater than 1.54.

The term redox buffering agent as used herein is to be interpreted as a material which acts as a buffer against changes in the redox state, so that molten glass can be held at a high temperature for a considerable period without major alteration of redox state. In particular the term is to be interpreted as referring to arsenic trioxide, or antimony trioxide.

All glasses referred to in the present specification, contain small quantities of antimony trioxide or arsenic trioxide (between 0.01% and 1% by weight) as a result of the methods of preparation.

Embodiments of the present invention will now be described by way of example with reference to the accompanying drawings in which:—

Figure 1 is a graph showing the effect on refractive index of substituting barium oxide and germania for boric oxide and silica respectively in a soda-boro-silicate glass;

Figure 2 is a graph showing the effect on refractive index of substituting germania for silica, in a soda-boro-barium silicate glass;

Figure 3 is a graph showing the effect of redox conditions on total fibre loss for an optical fibre; and

Figure 4 shows the impulse response of a one kilometre length of a single fibre according to the present invention.

In order to make a high numerical aperture optical fibre, it is necessary to have core glasses and cladding glasses which differ substantially in refractive index, and yet are compatible in terms of their other properties e.g. melting point, co-efficient of thermal expansion etc. Several suitable soda-boro-silicate cladding glasses are available which cover a range of thermal expansions, and which have refractive indices around 1.51 (see US patent specification 4,023,952). The main problem to be overcome is therefore one of developing a high refractive index glass which can be used for the core of the high numerical aperture optical fibre. Such a core glass must also be stable to crystallisation.

High refractive index glasses can be made by adding one or more of the following oxides to a soda-boro-silicate glass: lead oxide, barium oxide, germania, or lanthanum oxide. It is known that glasses containing lanthanum and lead have ultra violet absorption peaks at longer wavelengths than do glasses containing germanium or barium. For this reason germanium and barium containing glasses should exhibit a lower absorption at 850—900 nm (the GaAs and GaAlAs LED emitting wave-length) due to tails from the ultra violet absorption peaks than either lanthanum or lead containing glasses.

Appropriate glass compositions for use as the core glass of high numerical aperture optical fibres were determined by preparing a series of glasses in which increasing amounts of barium oxide or germanium oxide were systematically incorporated into soda-boro-silicate glass.

Tables I to III contain lists of various glasses prepared, together with their refractive indices and an indication of their stability against devitrification. Table IV is a list of glasses which were found to have the desired properties for use in the cores of high numerical aperture fibres.

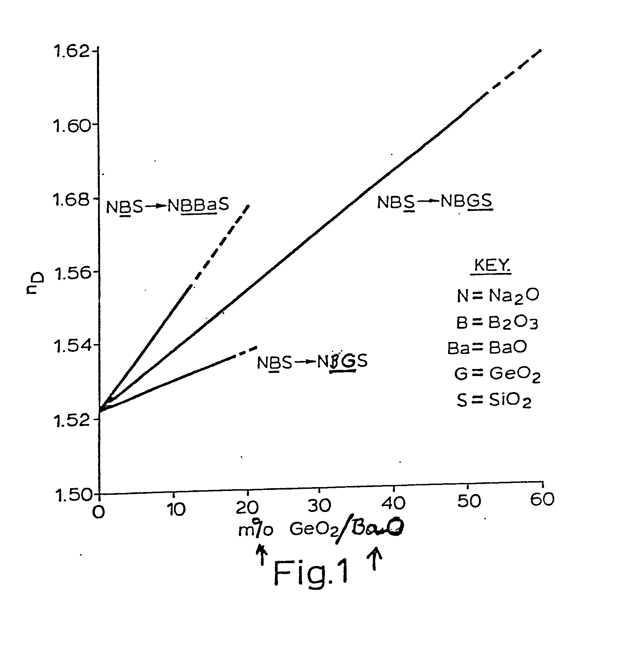

Figure 1 illustrates graphically the effect of substituting barium oxide for boric oxide (indicated by N*BS*→N*BBa*S), germania for silica (indicated N*BS*→N*BGS*) and germania for boric oxide (indicated by N*BS*→N*BGS*) on the refractive index of the resulting glass. The base glass chosen for these experiments had an initial composition of 20 mole % soda, 20 mole % boric oxide and 60 mole % silica. It will be appreciated from this graph that the germania for boric oxide substitution has the least effect on refractive index and accordingly such a substitution is not incorporated in the process of the present invention.

It will be realised that barium oxide is incorporated into the glass as a network modifier, and replaces boric oxide which is a network former. This means that as boric oxide is replaced by barium oxide there is a tendency for the glass to become increasingly unstable against crystallisation. As germania, which is used to replace silica, is a network former in its own right, this problem is not encountered with germania. For this reason it is possible to add considerably more germania to the glass on a mol % basis, than barium oxide, without creating devitrification problems.

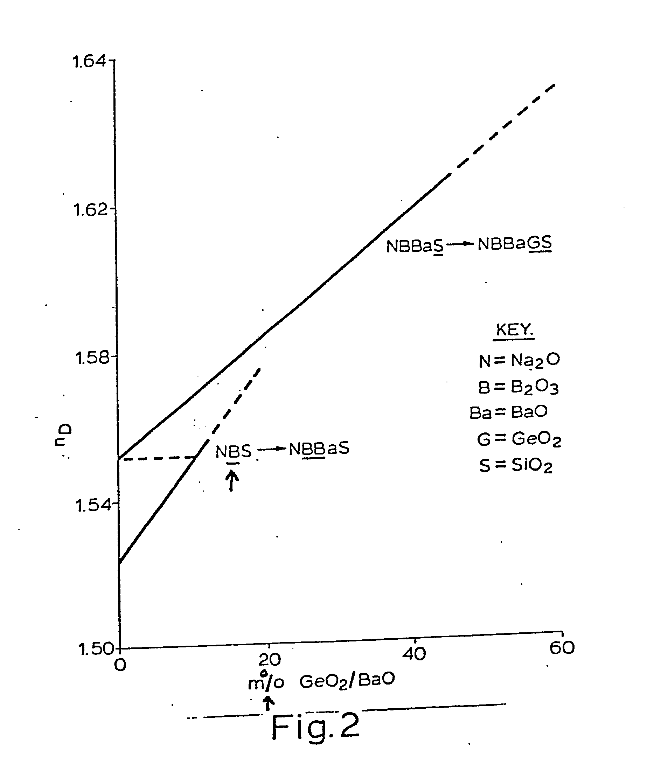

It is clear from Figure 1 that by either replacing boric oxide with barium oxide or silica with germania, an increase in refractive index is produced. These two results can be combined to produce a further series of glasses having a yet higher refractive index. However it is known that large quantities, in excess of 15 mol % of germania in a glass can cause an increase in the scatter loss of the resulting glass. It is therefore advantageous to maximise the use of barium oxide in raising the refractive index. The glass having the highest refractive index from the soda-boro-barium silicate series shown in Figure 1 (refractive index=1.554, and containing 11.7 mol % barium oxide) is therefore chosen as a parent glass and the silica is systematically replaced by germania. The refractive indices and stabilities of these glasses are shown in Figure 2, and it is seen that stable glasses can be produced with refractive indices up to 1.625. The dotted lines in Figures 1 and 2 indicate the point at which the glasses become unstable to crystallisation. In Figure

3

2 the legend N*B*S→N*BBa*S is used to denote substitution of barium oxide for boric oxide, similarly the legend NBBa*S*→NBBa*GS* is used to indicate the substitution of germania for silica.

When combined with a suitable cladding glass having a refractive index of 1.51, a range of fibre numerical aperture values up to 0.6 can be realised using the core glasses of the present invention.

Examples

A core glass having the following composition was selected—20 mol % soda, 8.3 mol % boric oxide, 11.7 mol % barium oxide, 8 mol % germanium oxide, 52 mol % silica. This glass was found to have a refractive index of 1.563 and was expected to give a fibre numerical aperture of the order of 0.43 when combined with soda-boro-silicate clad glass having a refractive index of 1.51. A cladding glass having the composition 15.1 mol % soda, 23.4 mol % boric oxide, and 61.5 mol % silica was selected. The core glass composition was chosen with the object of optimising an acceptable high numerical aperture with minimal scatter loss in the fibre.

The glass was prepared using the technique described in US—A—4,023,952 modified in relation to the recommended gas composition used for bubbling through the melt to establish the characteristic redox state of the glass. High purity materials, as described in US—A—4,023,952 were melted in one kilogram batches, and during the melting were bubbled with a dry gas to reduce the water content and to homogenise the glass. Glass rods one centimetre in diameter and two metres in length were drawn upwards from the melt surface. These rods were loaded into a double crucible and a continuous length of fibre was then pulled. Typical pulling temperatures were approximately 1000°C and the fibre was coated on-line with a silicone resin. The fibre geometry is maintained constant throughout with a fibre outside diameter of 125±1 microns and a core diameter of 72.5±1 microns.

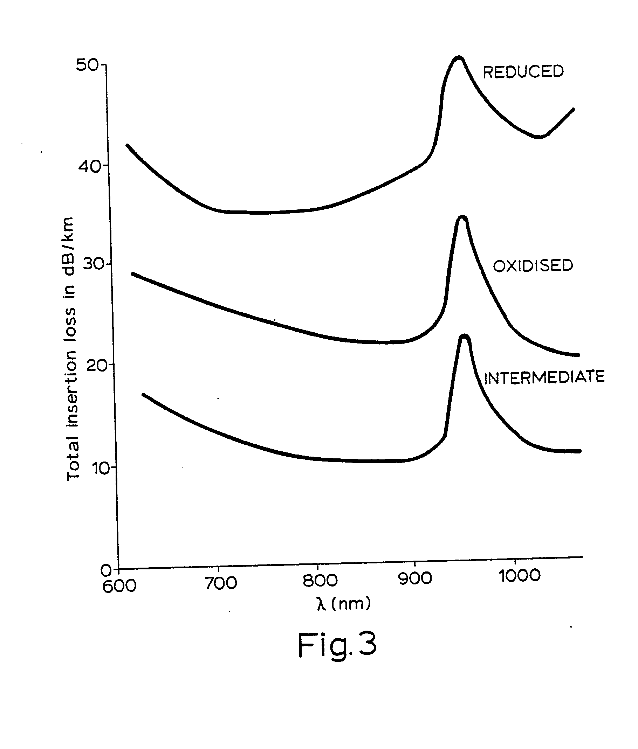

The redox conditions during the initial glass melting and subsequent fibre pulling must be carefully controlled in order to reduce the absorption loss due to metallic impurities in the powders—see US—A—4,023,952. Unfortunately the use of reducing conditions as recommended in that specification was found to cause volatilisation of germania from the melt, altering the overall glass composition to the point where the glass showed a tendency to crystallise. Three fibre runs were performed under different redox conditions, and Figure 3 shows the total loss curves obtained for each run.

The glass composition changes caused by the use of reducing conditions (bubbling the molten glass with a $CO/CO_2$ gas mixture giving a partial oxygen pressure of $10^{-8}$ Pascal) are reflected in the loss results. Although absorption is kept relatively low at 6.5 dB/km, the tendency of the core glass to crystallise results in a very high scatter loss, producing a very high total loss of 35 dB/km.

The use of oxidising conditions (bubbling the molten glass with pure oxygen giving a partial oxygen pressure of $10^{-5}$ Pascal eliminated the high scatter loss as the glass composition was maintained. Although the scatter loss was at an acceptably low level, the absorption loss due to the oxidised impurity transition metals (especially $Cu^{2+}$) was found to be unacceptably high at 18.7 dB/km.

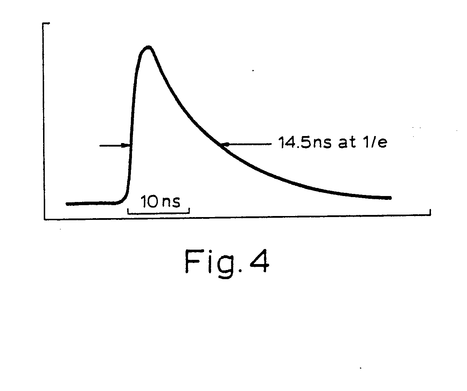

An intermediate redox state was obtained by using carbon dioxide gas (partial oxygen pressure of substantially 1 Pascal). Under these conditions the scatter loss was maintained at a relatively low value (5.4 dB/km at 800 nm). The partial oxygen pressure of substantially 1 Pascal was also sufficiently reducing to produce a low absorption loss (4.4 dB/km at 800 nm) and thus a fibre of total loss 9.8 dB/km at 850 nm was achieved. A fibre produced in this manner had a numerical aperture measured from the far-field radiation pattern of 0.43, and this was in good agreement with the calculated value. The pulse dispersion of a 1 ns wide input pulse was about 14.5 ns after passing through 1 kilometre of fibre cable when a GaAlAs laser was used as the source, and the light was mode scrambled over the first few centimetres. This impulse response is shown in Figure 4.

In a separate experiment four fibres using the different core glasses, having the compositions set out in Table V were prepared, using the technique described above. In each case the fibre had a cladding formed from an $Na_2O$—$B_2O_3$—$SiO_2$ glass having a refractive index of 1.5176. The resultant fibres had the numerical apertures and losses set out in Table VI.

The detailed effect of varying the partial oxygen pressure on total loss of these glasses has not been investigated because of the difficulty in varying partial oxygen pressure around the value of 1 Pascal. If even small quantities of carbon monoxide or oxygen are added to the carbon dioxide used for treating the glass a substantial change in partial oxygen pressure results. References to a partial oxygen pressure of substantially 1 Pascal in this specification are therefore to be interpreted as references to the partial oxygen pressure of the glass that results when pure carbon dioxide is bubbled through the melt to establish a characteristic redox state therein which state is maintained subsequently by the presence of 0.01 to 1% of a redox buffering agent in the melt.

Glasses produced by this technique can be thought of as characterised by the partial oxygen pressure frozen into the glass when the glass cools from the melt, despite the fact that the solid glass may no longer be in equilibrium with its surroundings. This fictive partial oxygen pressure is at least partially stable against remelting of the glass because of the presence of the redox buffering agent.

It should be emphasised that the core glass described in this specification, can be used with any compatible cladding glass. Typically compatible cladding glasses would have compositions selected from the soda-boro-silicate system.

# 0 018 110

## TABLE I
### Soda-boro-germania-silicate glasses

| Mol % SiO$_2$ | Mol % Na$_2$O | Mol % B$_2$O$_3$ | Mol % GeO$_2$ | Refractive index | Stable |
|---|---|---|---|---|---|
| 45 | 20 | 20 | 15 | 1.5461 | Yes |
| 40 | 20 | 20 | 20 | 1.5541 | Yes |
| 0 | 20 | 20 | 60 | 1.6175 | No |
| 60 | 20 | 15 | 5 | 1.5289 | Yes |
| 60 | 20 | 10 | 10 | 1.5314 | Yes |
| 60 | 20 | 5 | 15 | 1.5345 | Yes |
| 60 | 20 | 0 | 20 | 1.5379 | No |
| 30 | 20 | 20 | 30 | 1.5714 | Yes |
| 60 | 20 | 2.5 | 17.5 | 1.5385 | Phase separated |
| 15 | 20 | 20 | 45 | 1.5904 | Yes |
| 10 | 20 | 20 | 50 | 1.6015 | Yes |
| 5 | 20 | 20 | 55 | 1.6039 | No |

## TABLE II
### Soda-boro-barium-germania-silicate glasses

| Mol % Na$_2$O | Mol % B$_2$O$_3$ | Mol % BaO | Mol % GeO$_2$ | Mol % SiO$_2$ | Refractive index | Stable |
|---|---|---|---|---|---|---|
| 20 | 8.3 | 11.7 | 8 | 52 | 1.5692 | Yes |
| 20 | 8.3 | 11.7 | 20 | 40 | 1.5823 | Yes |
| 20 | 8.3 | 11.7 | 25 | 35 | 1.5916 | Yes |
| 20 | 8.3 | 11.7 | 30 | 30 | 1.5999 | Yes |
| 20 | 8.3 | 11.7 | 35 | 25 | 1.6091 | Yes |
| 20 | 8.3 | 11.7 | 12 | 48 | 1.5688 | Yes |
| 20 | 8.3 | 11.7 | 60 | 0 | 1.6503 | No |
| 20 | 8.3 | 11.7 | 40 | 20 | 1.6162 | Yes |
| 20 | 8.3 | 11.7 | 45 | 15 | 1.6230 | No |
| 20 | 8.3 | 11.7 | 50 | 10 | 1.6331 | No |
| 20 | 8.3 | 11.7 | 42.5 | 17.5 | 1.6222 | No |

5

TABLE III
Soda-boro-barium silicate glasses

| Mol % Na$_2$O | Mol % B$_2$O$_3$ | Mol % BaO | Mol % SiO$_2$ | Refractive index | Stable |
|---|---|---|---|---|---|
| 20 | 7.5 | 12.5 | 60 | 1.5541 | No |
| 20 | 8.3 | 11.7 | 60 | 1.551 | Yes |
| 20 | 7.5 | 15 | 57.5 | 1.5538 | No |
| 15 | 10 | 20 | 55 | 1.5785 | No |
| 22 | 5 | 18 | 55 | 1.5689 | No |
| 15 | 10 | 15 | 60 | 1.5673 | No |
| 20 | 10 | 10 | 60 | 1.5501 | Yes |
| 25 | 5 | 10 | 60 | 1.5458 | Yes |
| 20 | 5 | 15 | 60 | 1.5637 | No |
| 25 | 7.5 | 7.5 | 60 | 1.5403 | Yes |
| 22.5 | 10 | 7.5 | 60 | 1.5418 | Yes |
| 20 | 12 | 8 | 60 | 1.5451 | Yes |
| 20 | 16 | 4 | 60 | 1.5344 | Yes |
| 17.5 | 12.5 | 10 | 60 | 1.5501 | Yes |
| 17.5 | 17.5 | 5 | 60 | | Yes |
| 17.5 | 10.0 | 12.5 | 60 | 1.5576 | No |
| 22.5 | 5.0 | 12.5 | 60 | 1.5521 | No |
| 17.5 | 7.5 | 15.0 | 60 | | No |
| 15.0 | 20.0 | 5.0 | 60 | 1.5347 | Yes |
| 15.0 | 17.5 | 7.5 | 60 | | Yes |
| 12.5 | 20.0 | 7.5 | 60 | | No |
| 12.5 | 22.5 | 5 | 60 | | No |
| 15.0 | 22.5 | 2.5 | 60 | | Yes |
| 12.5 | 25 | 2.5 | 60 | 1.5224 | No |

6

TABLE IV
Glass compositions suitable for use as a core glass for high numerical aperture optical fibres

| Mol % Na$_2$O | Mol % B$_2$O$_3$ | Mol % BaO | Mol % GeO$_2$ | Mol % SiO$_2$ | Refractive index |
|---|---|---|---|---|---|
| 20 | 20 | 0 | 15 | 45 | 1.5461 |
| 20 | 20 | 0 | 20 | 40 | 1.5541 |
| 20 | 20 | 0 | 30 | 30 | 1.5714 |
| 20 | 8.3 | 11.7 | 0 | 60 | 1.551 |
| 20 | 10 | 10 | 0 | 60 | 1.5501 |
| 25 | 5 | 10 | 0 | 60 | 1.5458 |
| 22.5 | 7.5 | 10 | 0 | 60 | 1.5477 |
| 22.5 | 10 | 7.5 | 0 | 60 | 1.5418 |
| 20 | 12 | 8 | 0 | 60 | 1.5451 |
| 17.5 | 12.5 | 10 | 0 | 60 | 1.5501 |
| 20 | 8.3 | 11.7 | 8 | 52 | 1.5692 |
| 20 | 8.3 | 11.7 | 20 | 40 | 1.5823 |
| 20 | 8.3 | 11.7 | 25 | 35 | 1.5916 |
| 20 | 8.3 | 11.7 | 30 | 30 | 1.5999 |
| 20 | 8.3 | 11.7 | 35 | 25 | 1.6091 |
| 20 | 8.3 | 11.7 | 12 | 48 | 1.5688 |
| 20 | 8.3 | 11.7 | 40 | 20 | 1.6162 |

TABLE V
Core glass compositions

| Glass | Composition in mole % | | | | | Refractive index |
|---|---|---|---|---|---|---|
| | Na$_2$O | B$_2$O$_3$ | BaO | GeO$_2$ | SiO$_2$ | |
| A | 20 | 8.3 | 11.7 | — | 60 | 1.5495 |
| B | 20 | 8.3 | 11.7 | 8 | 52 | 1.5690 |
| C | 20 | 8.3 | 11.6 | 25 | 35 | 1.5916 |
| D | 20 | 8.3 | 11.7 | 45 | 15 | 1.6230 |

TABLE VI
Fibre properties

| Glass No. | Fibre N.A. | Loss at 850 mm (dB/km) |
|---|---|---|
| A | 0.32 | 7.2 |
| B | 0.43 | 9.8 |
| C | 0.5 | 11.5 |
| D | 0.6 | 15.2 |

**Claims**

1. A high numerical aperture optical fibre core glass having a composition chosen so that it is not subject to devitrification or phase separation and having a refractive index greater than 1.5, said glass containing soda, boric oxide and silica together with 0.01 to 1% by weight of a redox buffering agent to maintain a fictive partial oxygen pressure in the glass, characterised in that the glass contains:

(i) 15—25 mole % of soda,
(ii) 0—20 mole % of boric oxide or a mixture of boric oxide and barium oxide such that up to 12 mole % of the glass is barium oxide, and
(iii) 25—65 mole % of silica or a mixture of germania and silica such that up to 42 mole % of the glass is germania,

the glass including at least either barium oxide or germania, in that the glass is in the same redox state as is obtained when the glass is melted and frozen in equilibrium with a partial oxygen pressure of substantially 1 Pascal, and in that the refractive index is greater than 1.54.

2. A glass as claimed in claim 1, further characterised in that the redox buffering agent is arsenic trioxide.

3. A glass as claimed in claim 1 or 2, further characterised in that it comprises 20 mole % of soda, 8.3 mole % of boric oxide, 11.7 mole % of barium oxide, 52 mole % of silica and 8 mole % of germania.

4. A high numerical aperture optical fibre, characterised in that it has a core of glass as claimed in any one of claims 1 to 3, and a cladding of soda-boro-silicate glass having a composition chosen so that it is not subject to devitrification or phase separation.

5. An optical fibre as claimed in claim 4, further characterised in that the cladding glass has substantially the following composition 15.1 mole % of soda, 23.4 mole % boric oxide and 61.5 mole % of silica.

6. A process for the manufacture of a high numerical aperture optical fibre core glass having a composition chosen so that it is not subject to devitrification or phase separation and having a refractive index greater than 1.5, said process comprising the steps of producing a melt containing soda, boric oxide and silica, establishing a characteristic redox state in the glass melt, and maintaining said state by the addition of 0.01 to 1% by weight of a redox buffering agent to the melt, characterised in that the melt contains:

(i) 15—25 mole % of soda,
(ii) 0—20 mole % of boric oxide or a mixture of boric oxide and barium oxide such that up to 12 mole % of the melt is barium oxide, and
(iii) 25—65 mole % of silica or a mixture of germania and silica such that up to 42 mole % of the melt is germania,

the melt including at least either germania or barium oxide, in that the establishing step comprises subjecting the melt to a partial oxygen pressure of substantially 1 Pascal, and in that the melt results in a glass having a refractive index greater than 1.54.

7. A process as claimed in claim 6, further characterised in that the subjecting step comprises bubbling pure dry carbon dioxide through the melt.

8. A high numerical aperture optical fibre core glass having a composition chosen so that it is not subject to devitrification or phase separation and having a refractive index greater than 1.5, said glass containing soda, boric oxide and silica together with 0.01 to 1% by weight of a redox buffering agent to maintain a fictive partial oxygen pressure in the glass, characterised in that the glass contains:

(i) 15—25 mole % of soda,
(ii) 12.5 mole % of boric oxide and 10 mole % of barium oxide, and
(iii) 60 mole % of silica,

in that the glass is in the same redox state as is obtained when the glass is melted and frozen in equilibrium with a partial oxygen pressure of substantially 1 Pascal, and in that the refractive index is greater than 1.54.

9. A glass as claimed in claim 8, further characterised in that the redox buffering agent is arsenic trioxide.

10. A high numerical aperture optical fibre, characterised in that it has a core of glass claimed in claim 8 or claim 9 and a cladding of soda-boro-silicate glass having a composition chosen so that it is not subject to devitrification or phase separation.

11. A process for the manufacture of a high numerical aperture optical fibre core glass having a composition chosen so that it is not subject to devitrification or phase separation and having a refractive index greater than 1.5, said process comprising the steps of producing a melt containing soda, boric oxide and silica, establishing a characteristic redox state in the glass melt, and maintaining said state by the addition of 0.01 to 1% by weight of a redox buffering agent to the melt, characterised in that the melt contains:

(i) 15—25 mole % of soda,
(ii) 12.5 mole % of boric oxide and 10 mole % of barium oxide, and
(iii) 60 mole % of silica,

in that the establishing step comprises subjecting the melt to a partial oxygen pressure of substantially 1 Pascal, and in that the melt results in a glass having a refractive index greater than 1.54.

12. A process as claimed in claim 11, further characterised in that the subjecting step comprises bubbling pure dry carbon dioxide through the melt.

**Patentansprüche**

1. Kernglas einer optischen Faser mit hoher numerischer Apertur, welches eine so gewählte Zusammensetzung aufweist, daß es nicht der Entglasung oder Phasentrennung unterliegt und einen Brechungsindex von mehr als 1,5 hat und das Glas Soda, Boroxid und Siliciumdioxid zusammen mit 0,01 bis 1 Gew.% eines Redoxpuffermittels zur Aufrechterhaltung eines fiktiven Sauerstoffpartialdrucks im Glas enthält, dadurch gekennzeichnet, daß das Glas

(i) 15 bis 25 mol % Soda
(ii) 0 bis 20 mol % Boroxid oder eine Mischung von Boroxid und Bariumoxid, so daß bis zu 12 mol % des Glases Bariumoxid sind, und
(iii) 25 bis 65 mol % Siliciumdioxid oder eine Mischung von Germaniumoxid und Siliciumdioxid, so daß bis zu 42 mol % des Glases Germaniumoxid sind,

enthält, daß das Glas mindestens entweder Bariumoxid oder Germaniumoxid enthält, daß sich das Glas im selben Redoxzustand befindet, wie es erhalten wird, wenn das Glas geschmolzen und im Gleichgewicht mit einem Sauerstoffpartialdruck von im wesentlichen 1 Pascal eingefroren wird, und daß der Brechungsindex größer als 1,54 ist.

2. Glas gemäß Anspruch 1, dadurch gekennzeichnet, daß das Redoxpuffermittel Arsentrioxid ist.

3. Glas gemäß Anspruch 1 oder 2, dadurch gekennzeichnet, daß es 20 mol % Soda, 8,3 mol % Boroxid, 11,7 mol % Bariumoxid, 52 mol % Siliciumdioxid und 8 mol % Germaniumoxid enthält.

4. Optische Faser mit hoher numerischer Apertur, dadurch gekennzeichnet, daß sie einen Kern aus Glas gemäß irgendeinem der Ansprüche 1 bis 3 und eine Ummantelung aus einem Soda-Bor-Silikatglas mit einer Zusammensetzung, die so gewählt ist, daß es nicht der Entglasung oder der Phasentrennung unterliegt, aufweist.

5. Optische Faser gemäß Anspruch 4, dadurch gekennzeichnet, daß das Mantelglas im wesentlichen die folgende Zusammensetzung aufweist: 15,1 mol % Soda, 23,4 mol % Boroxid und 61,5 mol % Siliciumdioxid.

6. Verfahren zur Herstellung von Kernglas für optische Fasern mit hoher numerischer Apertur mit einer Zusammensetzung, die so gewählt ist, daß es nicht der Entglasung oder Phasentrennung unterliegt und einen Brechungsindex von mehr als 1,5 besitzt, wobei das Verfahren die Schritte der Herstellung einer Schmelze, die Soda, Boroxid und Siliciumdioxid enthält, die Festlegung eines charakteristischen Redoxzustandes in der Glasschmelze, und die Aufrechterhaltung dieses Zustandes durch die Zugabe von 0,01 bis 1 Gew.% eines Redoxpuffermittels zur Schmelze beinhaltet, dadurch gekennzeichnet, daß die Schmelze

(i) 15 bis 25 mol % Soda,
(ii) 0 bis 20 mol % Boroxid oder eine Mischung von Boroxid und Bariumoxid, so daß bis zu 12 mol % der Schmelze Bariumoxid sind, und
(iii) 25 bis 65 mol % Siliciumdioxid oder eine Mischung von Germaniumoxid und Siliciumdioxid enthält, so daß bis zu 42 mol % der Schmelze Germaniumosid sind,

enthält, daß die Schmelze mindestens entweder Germanium-oder Bariumoxid enthält, daß der festlegende Schritt die Unterwerfung der Schmelze unter einen Sauerstoffpartialdruck von im wesentlichen 1 Pascal beinhaltet, und daß die Schmelze ein Glas ergibt, welches einen Brechungsindex von mehr als 1,54 hat.

7. Verfahren nach Anspruch 6, dadurch gekennzeichnet, daß der unterwerfende Schritt das Durchleiten von reinem trockenem Kohlendioxid durch die Schmelze beinhaltet.

8. Kernglas einer Faser mit hoher numerischer Apertur, welches eine so gewählte Zusammensetzung aufweist, daß es nicht der Entglasung oder Phasentrennung unterliegt und einen Brechungsindex von mehr als 1,5 hat und das Glas Soda, Boroxid und Siliciumdioxid zusammen mit 0,01 bis 1 Gew.% eines Redoxpuffermittels zur Aufrechterhaltung eines fiktiven Sauerstoffpartialdrucks im Glas enthält, dadurch gekennzeichnet, daß das Glas

(i) 15 bis 25 mol % Soda,
(ii) 12,5 mol % Boroxid und 10 mol % Bariumoxid und
(iii) 60 mol % Siliciumdioxid

enthält, daß sich das Glas im gleichen Redoxzustand befindet, wie es erhalten wird, wenn das Glas geschmolzen und im Gleichgewicht mit einem Sauerstoffpartialdruck von im wesentlichen 1 Pascal eingefroren wird, und daß der Brechungsindex größer als 1,54 ist.

9. Glas nach Anspruch 8, dadurch gekennzeichnet, daß das Redoxpuffermittel Arsentrioxid ist.

10. Optische Faser mit hoher numerischer Apertur, dadurch gekennzeichnet, daß sie einen Kern aus Glas nach Anspruch 8 oder 9 und eine Ummantelung aus einem Soda-Bor-Silikatglas, welches eine Zusammensetzung aufweist, die so gewählt ist, daß es nicht der Entglasung oder Phasentrennung unterliegt, aufweist.

11. Verfahren zur Herstellung eines Kernglases einer optischen Faser mit hoher numerischer Apertur mit einer Zusammensetzung, die so gewählt ist, daß es nicht der Entglasung oder Phasentrennung unterliegt und einen Brechungsindex von mehr als 1,5 aufweist, wobei das Verfahren die Schritte der Herstellung einer Schmelze, die Soda, Boroxid und Siliciumdioxid enthält, die Festlegung eines charakteristischen Redoxzustandes in der Glasschmelze und Aufrechterhaltung dieses Zustandes durch die Zugabe von 0,01 bis 1 Gew.% eines Redoxpuffermittels zur Schmelze beinhaltet, dadurch gekennzeichnet, daß die Schmelze

(i) 15 bis 25 mol % Soda,
(ii) 12,5 mol % Boroxid und 10 mol % Bariumoxid, und
(iii) 60 mol % Siliciumdioxid

enthält, daß der festlegende Schritt die Unterwerfung der Schmelze unter einen Sauerstoffpartialdruck von im wesentlichen 1 Pascal beinhaltet, und daß die Schmelze ein Glas erzeugt, welches einen Brechungsindex von mehr als 1,54 aufweist.

12. Verfahren nach Anspruch 11, dadurch gekennzeichnet, daß der unterwerfende Schritt das Durchleiten von reinem trockenem Kohlendioxid durch die Schmelze beinhaltet.

**Revendications**

1. Verre pour coeur de fibres optiques à grande ouverture numérique, ayant une composition choisie de façon qu'il ne subisse aucune dévitrification ou séparation de phase, et ayant un indice de réfraction supérieur à 1,5, ce verre contenant de l'oxyde de sodium, de l'anhydride borique et de la silice, en même temps que 0,01 à 1% en poids d'un agent tampon rédox destiné à maintenir dans le verre une pression partielle d'oxygène fictive, caractérisé en ce que le verre contient:

(i) 15—25 %-molaire d'oxyde de sodium,
(ii) 0—20 %-molaire d'anhydride borique ou d'un mélange d'anhydride borique et d'oxyde de baryum tel que la concentration de l'oxyde de baryum dans le verre soit inférieure ou égale à 12 %-molaire, et
(iii) 25—65 %-molaire de silice ou d'un mélange d'oxyde de germanium et de silice tel que la concentration de l'oxyde de germanium dans le verre soit inférieure ou égale à 42 %-molaire,

le verre contenant au moins ou bien de l'oxyde de baryum, ou bien de l'oxyde de germanium; que le verre se trouve dans le même état d'oxydoréduction que celui que l'on obtient quand le verre est fondu et solidifié en équilibre avec une pression partielle d'oxygène essentiellement égale à 1 Pascal; et que l'indice de réfraction est supérieur à 1,54.

2. Verre selon la revendication 1, caractérisé en ce que l'agent tampon rédox est le trioxyde d'arsenic.

3. Verre selon l'une quelconque des revendications 1 ou 2, caractérisé en ce qu'il contient 20 %-molaire d'oxyde de sodium, 8,3 %-molaire d'anhydride borique, 11,7 %-molaire d'oxyde de baryum, 52 %-molaire de silice et 8 %-molaire d'oxyde de germanium.

4. Fibre optique à grande ouverture numérique, caractérisée en ce qu'elle possède un coeur en un verre selon l'une quelconque des revendications 1 à 3, et une gaine en un verre à l'oxyde de

**0 018 110**

sodium-borosilicate ayant une composition choisie de façon qu'il ne subisse ni dévitrification, ni séparation de phase.

5. Fibre optique selon la revendication 4, caractérisée en ce que le verre pour la gaine a essentiellement la composition suivante: 15,1 %-molaire d'oxyde de sodium, 23,4 %-molaire d'anhydride borique et 61,5 %-molaire de silice.

6. Procédé pour la fabrication d'un verre pour coeur de fibre optique à grande ouverture numérique, ayant une composition choisie de façon que le verre ne soit pas soumis à une dévitrification ou une séparation des phases, le verre ayant un indice de réfraction supérieur à 1,5, ce procédé comprenant les étapes consistant à produire une fonte contenant de l'oxyde de sodium, de l'anhydride borique et de la silice, à créer un état caractéristique d'oxydoréduction dans la fonte et à maintenir cet état grâce à l'addition, à la fonte, de 0,01 à 1% en poids d'un agent tampon rédox, caractérisé en ce que la fonte contient:

(i) 15—20 %-molaire d'oxyde de sodium,

(ii) 0—20 %-molaire d'anhydride borique ou d'un mélange d'anhydride borique et d'oxyde de baryum tel que la concentration de l'oxyde de baryum dans la fonte soit inférieure ou égale à 12 %-molaire, et

(iii) 25—65 %-molaire de silice ou d'un mélange d'oxyde de germanium et de silice, tel que la concentration de l'oxyde de germanium dans la fonte soit inférieure ou égale à 42 %-molaire,

la fonte contenant au moins ou bien de l'oxyde de germanium, ou bien de l'oxyde de baryum; que l'étape de création d'un état caractéristique d'oxydoréduction consiste à soumettre la fonte à une pression partielle d'oxygène essentiellement égale à 1 Pascal; et que la fonte donne un verre ayant un indice de réfraction supérieur à 1,54.

7. Procédé selon la revendication 6, caractérisé en ce que l'étape consistant à soumettre la fonte à une pression partielle d'oxygène essentiellement égale à 1 Pascal consiste à faire bouillonner à travers la fonte de l'anhydride carbonique sec pur.

8. Verre pour coeur de fibre optique à grande ouverture numérique ayant une composition choisie de façon qu'il ne soit soumis ni à une dévitrification, ni à une séparation des phases, et ayant un indice de réfraction supérieur à 1,5, ce verre contenant de l'oxyde de sodium, de l'anhydride borique et de la silice, en même temps que 0,01 à 1% en poids d'un agent tampon rédox destiné à maintenir dans le verre une pression partielle d'oxygène fictive, caractérisé en ce que le verre contient:

(i) 15—25 %-molaire d'oxyde de sodium,

(ii) 12,5 %-molaire d'anhydride borique et 10 %-molaire d'oxyde de baryum, et

(iii) 60 %-molaire de silice;

que le verre est dans le même état d'oxydoréduction que celui obtenu quand le verre est fondu et solidifié en équilibre avec une pression partielle d'oxygène essentiellement égale à 1 Pa; et que l'indice de réfraction est supérieur à 1,54.

9. Verre selon la revendication 8, caractérisé en ce que l'agent tampon rédox est le trioxyde d'arsenic.

10. Fibre optique à grande ouverture numérique, caractérisée en ce qu'elle possède un coeur en verre selon l'une quelconque des revendications 8 ou 9, et une gaine en verre à l'oxyde de sodium-borosilicate, ayant une composition choisie de façon qu'il ne soit soumis ni à une dévitrification, ni à une séparation de phase.

11. Procédé pour la fabrication d'un verre pour coeur de fibre optique à grande ouverture numérique, ayant une composition choisie de façon à ne pas être soumis à une dévitrification ou à une séparation de phases, et possédant un indice de réfraction supérieur à 1,5, procédé comprenant les étapes consistant à produire une fonte contenant de l'oxyde de sodium, de l'anhydride borique et de la silice, à créer un état caractéristique d'oxydoréduction dans la fonte, et à maintenir cet état par addition, à la fonte, de 0,01 à 1% en poids d'un agent tampon rédox, caractérisé en ce que la fonte contient:

(i) 15—25 %-molaire d'oxyde de sodium,

(ii) 12,5 %-molaire d'anhydride borique et 10 %-molaire d'oxyde de baryum, et

(iii) 60 %-molaire de silice;

que l'étape de création d'un état caractéristique d'oxydoréduction consiste à soumettre la fonte à une pression partielle d'oxygène essentiellement égale à 1 Pascal; et que la fonte donne un verre ayant un indice de réfraction supérieur à 1,54.

12. Procédé selon la revendication 11, caractérisé en ce que l'étape consistant à soumettre la fonte à une pression partielle d'oxygène essentiellement égale à 1 Pascal consiste à faire bouillonner à travers la fonte de l'anhydride carbonique sec pur.

11

Fig.1

Fig. 2

KEY.

N = $Na_2O$

B = $B_2O_3$

Ba = BaO

G = $GeO_2$

S = $SiO_2$

Fig. 3

3

Fig. 4